# EUROPEAN PATENT SPECIFICATION

(11) **EP 2 653 943 B1**
(45) Date of publication and mention of the grant of the patent: **25.09.2019**
(21) Application number: 13163719.1
(22) Date of filing: 15.04.2013
(51) Int. Cl.: G05B 23/02

(54) **Methods and apparatus for monitoring operation of a system asset**
Verfahren und Vorrichtung zur Überwachung des Betriebs einer Systemanlage
Procédés et appareil permettant de surveiller le fonctionnement d'un système actif

(30) Priority: 19.04.2012 US 201213450646
(43) Date of publication of application: 23.10.2013
(73) Proprietor: General Electric Company, Schenectady, NY 12345 (US)
(72) Inventor: Pathak, Sanideep Dilip, 400076 Maharashtra (IN); Shaikh, Tauseef Ahmed, 400076 Maharashtra (IN); Roaldson, Ryan, Minden, Nevada 89423 (US)
(74) Representative: BRP Renaud & Partner mbB Rechtsanwälte Patentanwälte Steuerberater

(56) References cited:
- EP-A2- 0 411 869
- WO-A1-2004/029557
- US-A1- 2009 248 179

## Description

The present application relates generally to systems and, more particularly, to methods and apparatus for use in monitoring operations of a system asset.

At least some known power systems include a plurality of components, such as generators, motors, fans, and/or other components. Such components are often positioned within a building such as a power plant or a factory. A building may include a large enough number of components such that a user may have difficulty locating desired components and/or navigating to desired components. For example, a desired component may be positioned behind and/or may be obscured by another component such that the desired component is not easily seen.

To facilitate monitoring system components, at least some known systems are modeled using virtual representations of the system components. Such models may include representations of the system components and may display a status of the components. However, often such models include too much information such that desired information may be obscured. For example, if a component enters an alarm state, the status of the component may be overshadowed or obscured by status information of the other system components.

WO-A-2004/029557 concerns an energy performance monitoring system in which data relating to resource consumption is recorded in conjunction with production data related to industrial or commercial applications. The data is displayed in graphical or tabular form in contrast with reference values representative of benchmark efficiency levels.

The present invention provides a device as defined in appended claim 1 and a method as defined in appended claim 11.

In one embodiment, a device for use in monitoring operation of a system asset includes a display device and a processor coupled to the display device. The processor is configured to display, on the display device, a first plot of a plurality of graphical plots of a first operation characteristic of the system asset as a function of a second operation characteristic in response to a user selection to display the first plot of the plurality of graphical plots, display, on the display device, a reference graphical plot of the first operation characteristic of the system asset as a function of the second operation characteristic overlying the first plot of the plurality of graphical plots, and maintain the display of the reference graphical plot on the display device when the user selects a second plot of the plurality of graphical plots, such that the reference graphical plot is displayed overlying the second plot.

In another embodiment, a device for use in monitoring operation of a system asset includes a display device and a processor coupled to the display device. The processor is configured to display, on the display device, a first plot of a plurality of graphical plots of a first operation characteristic of the system asset as a function of a second operation characteristic in response to a user selection to display the first plot of the plurality of graphical plots, display, on the display device, a reference graphical plot of the first operation characteristic of the system asset as a function of the second operation characteristic overlying the first plot of the plurality of graphical plots, display, on the display device, a first representation of a difference between the first operation characteristic of the first plot and the reference graphical plot at a first selected value of the second operation characteristic in response to a user selection of the selected value of the second operation characteristic, and display, on the display device, a second representation of a difference between the first operation characteristic of a second plot of the plurality of graphical plots and the reference graphical plot at the first selected value of the second operation characteristic in response to a user selection of the second plot.

In yet another embodiment, a method for use in monitoring operation of a system asset includes displaying, on a display device, a first plot of a first operation characteristic of the system asset as a function of a second operation characteristic in response to a user selection to display the first plot, displaying, on the display device, a reference graphical plot of the first operation characteristic of the system asset as a function of the second operation characteristic overlying the first plot of the plurality of graphical plots, and maintaining the display of the reference graphical plot on the display device when the user selects a second plot of the plurality of graphical plots, the reference graphical plot displayed overlying the second plot.
FIG. 1 is a block diagram of an exemplary system including a plurality of system assets.
FIG. 2 is a block diagram of an exemplary display that may be produced by the system shown in FIG. 1.
FIG. 3 is the exemplary display shown in FIG. 1 after a user has selected a different plot.
FIG. 4 is another exemplary display that may be produced by the system shown in FIG. 1.

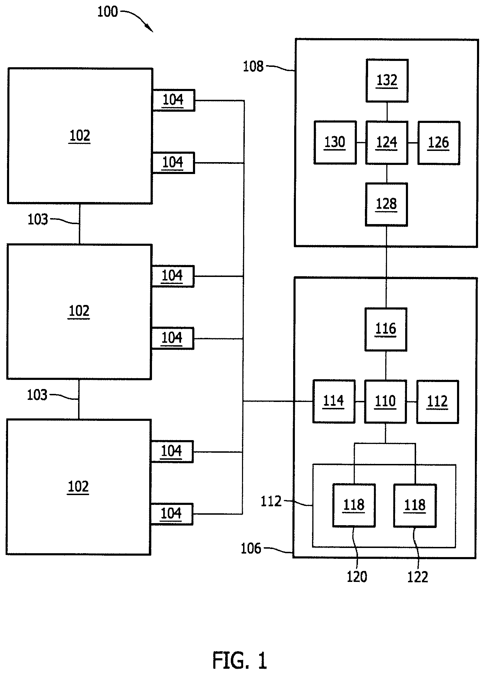

FIG. 1 is a block diagram of an exemplary system 100 that includes a plurality of system assets 102. In the exemplary embodiment, system 100 may be, or may include, a factory, an industrial system or facility, a mill, a refinery, a manufacturing facility, a power generation plant or facility, and/or any other system that includes a plurality of system assets 102. System assets 102 may include, but are not limited to only including, machines, motors, generators, pumps, fans, computer systems or devices, sensors, and/or any other device or machine that enables system 100 to function as described herein.

In the exemplary embodiment, at least one sensor 104 is coupled to at least one system asset 102 for use in measuring an operating condition of asset 102. For example, if asset 102 is a rotating machine, sensors 104 may measure a vibration of a drive shaft of the machine, a rotational frequency or speed of the drive shaft, a temperature of the machine, a pressure within the machine, and/or any other operating condition of any component or device within or coupled to system 100.

System 100 also includes a data acquisition device 106 and a computing device 108 that is coupled to data acquisition device 106. In the exemplary embodiment, data acquisition device 106 includes a processor 110 coupled to one or more memory devices 112, a sensor interface 114 (also sometimes referred to as an input), a communication interface 116, and one or more databases 118.

Processor 110 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

Memory device 112 includes a computer readable storage medium, such as, without limitation, random access memory (RAM), flash memory, a hard disk drive, a solid state drive, a diskette, a flash drive, a compact disc, a digital video disc, and/or any suitable memory. In the exemplary embodiment, memory device 112 includes data and/or instructions that are executable by processor 110 (i.e., processor 110 is programmed by the instructions) to enable processor 110 to perform the functions described herein.

Sensor interface 114 is coupled to sensors 104 for receiving signals representative of measured operating conditions of assets 102. More specifically, sensor interface 114 receives signals from sensors 104 via a wireless connection and/or via a wired connection to sensors 104. In the exemplary embodiment, sensor interface 114 converts and/or adjusts the signals received from sensors 104 for use with processor 110. In one embodiment, sensor interface 114 includes an analog-to-digital converter (ADC) that converts analog signals received from sensors 104 to digital data representative of the measured operating conditions (hereinafter referred to as "asset measurement data"), and the asset measurement data is transmitted to processor 110. In the exemplary embodiment, data acquisition device 106 determines a status of each system asset 102 based on the asset measurement data received.

Communication interface 116 may include, without limitation, a network interface controller (NIC), a network adapter, a transceiver, or any other communication interface or device that enables data acquisition device 106 to operate as described herein. In the exemplary embodiment, communication interface 116 may connect to computing device 108 using any suitable wired or wireless network and/or communication protocol.

Databases 118 include a measurement database 120 and a reference database 122. Alternatively, databases 118 may include any other database, and/or measurement database 120 and reference database 122 may be combined into one database 118. In one embodiment, databases 118 are included within one or more memory devices 112. Alternatively, databases 118 are included within one or more remote storage devices, such as a network attached storage (NAS) device, an external hard drive, a remote computing device, and/or any other storage device that enables data acquisition device 106 to function as described herein.

In the exemplary embodiment, processor 110 stores asset measurement data received from sensors 104 in measurement database 120. During operation, sensor interface 114 receives sensor measurement signals from sensors 104 and converts the signals into asset measurement data that is stored, by processor 110, in measurement database 120. Moreover, processor 110, or another device, stores reference data for each system asset 102 in reference database 122. Reference data for each system asset 102 may include any suitable reference data concerning the system asset 102. For example, reference data may be based on expected or predicted performance of a system asset 102 based, for example, on a manufacturer's specifications for the particular system asset 102. Additionally, or alternatively, reference data may be based on measurement data. In some embodiments, the reference data is derived from measurement data for a system asset 102 measured when the particular system asset 102 was newly installed in system 100 and/or functioning at its best. In some embodiments, a user may select to store any desired measurement data for a system asset 102 as reference data for that system asset 102.

In the exemplary embodiment, computing device 108 is coupled to data acquisition device 106 for receiving data from data acquisition device 106 and/or displaying one or more graphical plots of measurement data from a system asset 102. Computing device 108 includes a processor 124 coupled to a memory device 126, a communication interface 128, a user input device 130, and a display 132. In the exemplary embodiment, computing device 108 is a mobile device, such as a laptop, a smartphone, a personal digital assistant (PDA), a tablet computer, and/or any other device that functions as described herein. Alternatively, computing device 108 is a desktop computer, a server computer, and/or any other computing device that enables system 100 to function as described herein. In some embodiments, computing device 108 and data acquisition device 106 may be combined in a single device.

Processor 124 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

Memory device 126 includes a computer readable storage medium, such as, without limitation, random access memory (RAM), flash memory, a hard disk drive, a solid state drive, a diskette, a flash drive, a compact disc, a digital video disc, and/or any suitable memory. In the exemplary embodiment, memory device 126 includes data and/or instructions that are executable by processor 124 (i.e., processor 124 is programmed by the instructions) to enable processor 124 to perform the functions described herein.

Communication interface 128 may include, without limitation, a network interface controller (NIC), a network adapter, a transceiver, or any other communication interface or device that enables computing device 108 to operate as described herein. In the exemplary embodiment, communication interface 128 may connect to data acquisition device 106 using any suitable wired or wireless network and/or communication protocol.

User input device 130 includes, without limitation, a keyboard, a keypad, a touch-sensitive screen, a mouse, a scroll wheel, a pointing device, an audio input device employing speech-recognition software, and/or any suitable device that enables a user to input data into computing device 108 and/or retrieve data from computing device 108. Display 132 includes, without limitation, a liquid crystal display (LCD), a vacuum fluorescent display (VFD), a cathode ray tube (CRT), a plasma display, a light-emitting diode (LED) display, one or more LEDs, and/or any suitable visual output device capable of displaying graphical data and text to a user. In one embodiment, display 132 may be a touch-sensitive screen that incorporates aspects of user input device 130, for example, by enabling a user to input data and/or commands through the screen.

In the exemplary embodiment, processor 124 selectively displays, or causes to be displayed on display device 132, one or more measurement graphical plots for a system asset 102 derived from measurement data for system asset 102 in response to a user selection. The measurement plots are generally graphical plots of a first operation characteristic of system asset 102 as a function of a second operation characteristic of system asset 102. For example, a plot may graph the vibration in a system asset 102 as a function of the speed of operation. Any suitable operation characteristics of system asset 102 may be selected. Some exemplary first operation characteristics include, without limitation, vibration, pressure, and temperature. Some exemplary second operation characteristics include, without limitation speed, frequency, length (time) of operation, and orders of magnitude. Each measurement graphical plot corresponds to an instant or an elapsed period of time at which the measurement data, from which it is derived, was collected. The length of the period of time may vary among various embodiments and/or according to the particular system asset 102. For example, data may be collected for a particular system asset 102 over a twenty-four hour period once a week, while data for another system asset 102 is collected for an entire week once a month. Each collection of data in a time period is sometimes referred to herein as a sample of reference data. Additionally, in some embodiments a sample of reference data may be subdivided into smaller time period samples. Thus, data for a system asset 102 may be collected substantially continuously and subdivided into hourly, daily, weekly, and/or monthly samples as desired.

Moreover, processor 124 displays, or causes to be displayed on display device 132, a reference graphical plot for a system asset 102 derived from reference data associated with the system asset 102. The reference graphical plot is a graphical plot of the same first operation characteristic as a function of the same second operation characteristic of system asset 102 as the graphical plot derived from measurement data. In the exemplary embodiment, the reference graphical plot is displayed overlying the measurement graphical plot. In other embodiments, the reference graphical plot may underlie the measurement graphical plot. When a user selects to display a second reference graphical plot, such as by selecting a second sample, processor 124 maintains the display of the reference graphical plot on display device 132 such that the reference graphical plot overlies the second measurement plot.

As will be described in more detail below, in the exemplary embodiment, processor 124 simultaneously displays a plurality of measurement plots on display device 132. Thus, when a user selects to display a plot of a particular sample period for a system asset 102, processor also displays one or more additional measurement plots. In the exemplary embodiment, the additional measurement plots include one or more measurement plots of the immediately preceding, and the immediately following, sample periods. In some embodiments, the selected sample period is visually distinguishable from the additional sample periods, such as by highlighting, being a different color trace, and/or having an iconographic indicator, for example. The user-selected measurement plot is also distinguishable by being the measurement plot with the reference plot overlying it. In the exemplary embodiment, when a user selects a different sample, the measurement plots shift such that the newly selected sample period underlies the reference plot. In other embodiments, the reference plot moves to overlie the measurement plot for the newly selected sample.

A user may select one or more points on the selected measurement plot about which the user desires detailed information. In response to the user selection, processor 124 displays a representation of the difference between the first operation characteristic of the measurement plot and the reference graphical plot at the selected value of the second operation characteristic. In the exemplary embodiment, the representation of the difference includes a display of the magnitude of the first operation characteristic for the measurement plot at the selected second operation characteristic value, and the magnitude of the first operation characteristic for the reference plot at the selected second operation characteristic value. In other embodiments, the representation of the difference includes a display of the numerical difference between the reference plot and the measured plot at the selected second operation characteristic value. In some embodiments, the representation may illustrate whether the difference between the reference plot and the measurement plot at the selected value exceeds a pre-defined threshold value.

More than one point may be selected by a user for display of the additional information. As such, the difference information for multiple values of the second operation characteristic may be displayed simultaneously. In some embodiments, as the user moves a cursor along the selected measurement plot, the processor dynamically updates the display of the difference between the selected measurement plot and the reference plot. Moreover, the selected point, or points, persists when the user selects a different measurement plot for display. Thus, in such embodiments, a user may scroll through a series of measurement plots and view the difference between each measurement plot and the reference plot at the selected value of the second operation characteristic.

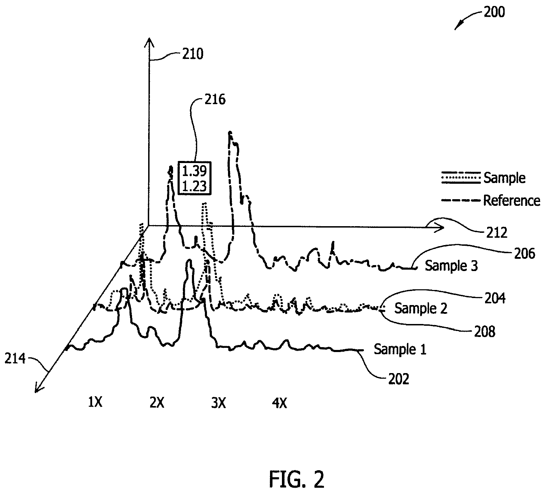

FIG. 2 is an exemplary display 200 that may be produced by system 100 (shown in FIG. 1). In the exemplary embodiment, display 200 includes a first measurement graphical plot 202 derived from measurement data for a first time period, a second measurement graphical plot 204 derived from measurement data for a second time period, and a third measurement graphical plot 206 derived from measurement data for a third time period. More specifically in FIG. 2, second measurement graphical plot 204 is the selected plot and is overlain by a reference graphical plot 208. Although the exemplary embodiment includes three measurement graphical plots 202, 204, and 206, other embodiments may include more or fewer measurement graphical plots. A first axis 210 of display 200 represents the magnitude of the first operation characteristic for the selected system asset 102, while a second axis 212 is the value of second operation characteristic for the selected system asset 102. Thus, each measurement graphical plots 202, 204, and 206, graphically illustrates the value of the first operation characteristic as a function of the second operation characteristic. Measurement graphical plots 202, 204, and 206 are separated from each other along a third axis 214. A difference identifier 216 represents the difference between the first operation characteristic of measurement plot 204 and reference graphical plot 208 at the selected value of the second operation characteristic. The difference displayed may be any suitable indication of the difference between the value of reference graphical plot and measurement plot 204. For example, the difference identifier may present a value of a difference, a percentage change, and/or whether the reference graphical plot is greater or less than measurement plot 204 for the selected value of the second operation characteristic. Moreover, in some embodiments, difference identifiers 216 may be, additionally or alternatively, displayed separate from measurement plots 202, 204, and/or 206, such as in a separate data box located near measurement plots 202, 204, and 206.

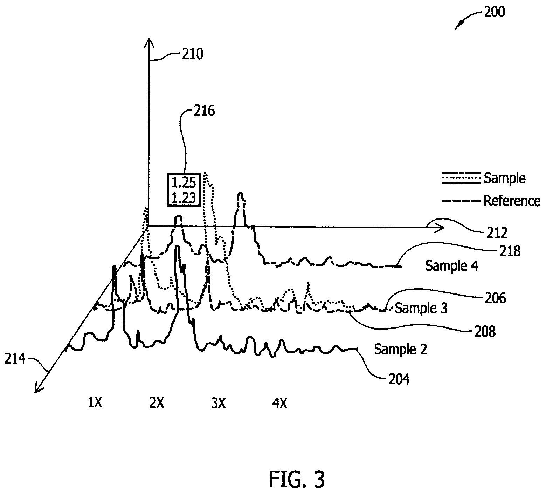

As described above, when a user selects a different or second measurement plot, in the exemplary embodiment, the measurement plots displayed shift so that the selected plot underlies the reference plot. FIG. 3 is the display 200 after a user has selected third measurement graphical plot 206. As a result plot 206 has moved to underlie reference graphical plot 208. Second graphical plot 204, shifts to the first position previously occupied by graphical plot 202. A fourth graphical measurement plot 218 is displayed in the position formerly occupied by plot 206. Moreover, difference identifier 216 persists after the user selects third measurement graphical plot 206. The value of reference plot 208 remains the same. The value of the third measurement graphical display 206, however, differs from that of plot 204 and the value indicated by difference identifier 216 has changed accordingly.

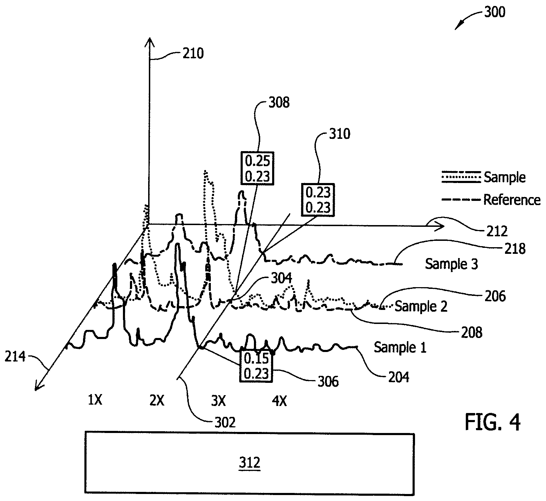

FIG. 4 is another exemplary display 300 produced by system 100 (shown in FIG. 1). In exemplary display 300, a reference line 302 is extended from a value of the first operation characteristic of reference plot 208 at a selected value 304 of the second operation characteristic in response to the user selection of selected value 304. Reference line 302 extends from reference plot 208 towards second plot 204 and fourth plot 218 along the first and second operation characteristic coordinates of the selected value. Difference identifiers 306, 308, and 310 present representations of the difference between the first operation characteristic of measurement plots 204, 206, and 218 and reference graphical plot 208 at the selected value of the second operation characteristic. The difference displayed may be any suitable indication of the difference between the value of reference graphical plot and measurement plots 204, 206, and/or 218. For example, the difference identifier may present a value of a difference, a percentage change, and/or whether the reference graphical plot is greater or less than measurement plots 204, 206 and/or 218 for the selected value of the second operation characteristic. Moreover, in some embodiments, difference identifiers 306, 308, 310 may be, additionally or alternatively, displayed separate from measurement plots 204, 206 and 218, such as in a data box 312 located near measurement plots 204, 206, and 218.

A technical effect of the systems and method described herein includes at least one of (a) displaying, on a display device, a first plot of a first operation characteristic of the system asset as a function of a second operation characteristic in response to a user selection to display the first plot; (b) displaying, on the display device, a reference graphical plot of the first operation characteristic of the system asset as a function of the second operation characteristic overlying the first plot of the plurality of graphical plots; and (c) maintaining the display of the reference graphical plot on the display device when the user selects a second plot of the plurality of graphical plots, the reference graphical plot displayed overlying the second plot.

The system described herein efficiently and robustly displays operation information for system assets. Graphical plots of measurement data for a system asset are plotted with a persistent reference plot. When a user selects different plots to display, the selected plot is display underlying the reference plot. Thus, a user may scroll through plots with the reference plot always overlying the selected plot. Moreover, one or more difference identifiers may be displayed identifying the difference between the selected plot and the reference plot. These difference identifiers persist with the reference plot and dynamically update as a user selects different plots to be displayed. Accordingly, the user may scroll through plots and continuously have difference information between the plots and the reference plot for a particular value. The system described herein thus facilitates review, troubleshooting, and analysis of system assets in a move efficient manner than known monitoring systems.

Exemplary embodiments of methods and apparatus for use in monitoring operation of a plurality of system assets are described above in detail. The methods and apparatus are not limited to the specific embodiments described herein, but rather, components of the apparatus and/or steps of the methods may be utilized independently and separately from other components and/or steps described herein. For example, the computing device may also be used in combination with other systems and methods, and is not limited to practice with only the system or the data acquisition device as described herein. Rather, the exemplary embodiment can be implemented and utilized in connection with many other power system or industrial applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A device (108) for use in monitoring operation of a system asset (102) comprising a device or a machine, said device (108) comprising:
a display device (132); and
a processor (124) coupled to said display device (132), said processor configured to:
display, on said display device (132), a first plot of a plurality of graphical plots of a first operation characteristic of the system asset (102) as a function of a second operation characteristic in response to a user selection to display the first plot of the plurality of graphical plots;
display, on said display device (132), a reference graphical plot of the first operation characteristic of the system asset (102) as a function of the second operation characteristic overlying the first plot of the plurality of graphical plots, wherein the reference graphical plot is based on expected or predicted performance of the system asset (102) based on a manufacturer's specifications for the particular system asset (102); and
maintain the display of the reference graphical plot on said display device when the user selects a second plot of the plurality of graphical plots, the reference graphical plot displayed overlying the second plot;
receive a selection of one or more points on the selected measurement plot about which the user desires detailed information; and
display a representation of the difference between the first operation characteristic and the reference graphical plot at the selected value of the second operation characteristic.

2. A device in accordance with Claim 1, further comprising a memory device (126) configured to store reference data for a system asset (102), and measurement data associated with the system asset, wherein said processor (124) is further configured to:
generate, based on the measurement data concerning the system asset, the plurality of graphical plots, each of the plurality of graphical plots corresponding to a different period of time; and
generate, based on the stored reference data, the reference graphical plot.

3. A device in accordance with Claim 2, wherein said processor (124) is configured to display, on said display device (132), the second plot with the first graphical plot in response to the selection of the first plot by the user, the first plot corresponding to a first time period and the second plot corresponding to a second time period.

4. A device in accordance with Claim 3, wherein the second time period is a next time period, relative to the first time period, for which a graphical plot is available in the plurality of graphical plots.

5. A device in accordance with any preceding Claim, wherein said processor (124) is configured to select and display, on said display device (132), a plurality of additional plots selected by the processor from the plurality of graphical plots in response to the selection of the first plot by the user, the first plot corresponding to a first time period and the additional plots corresponding to two or more additional time periods.

6. A device in accordance with Claim 5, wherein the plurality of additional plots includes the second plot.

7. A device in accordance with Claim 6, wherein said processor (124) is configured to move the display of the reference graphical plot on the display device (132) to overly the second plot when the user selects the second plot.

8. A device in accordance with Claim 6 or Claim 7, wherein said processor (124) is configured to move the second plot to underlie the reference graphical plot on the display device (132) when the user selects the second plot.

9. A device in accordance with any preceding Claim, wherein said processor (124) is configured to store, to a memory device, a selected measurement data as the reference data for the system asset in response to a user selection to store the selected measurement data as the reference data for the system asset.

10. A device in accordance with any preceding Claim, wherein said processor is configured to:
display, on said display device (132), a first representation of a difference between the first operation characteristic of the first plot and the reference graphical plot at a first selected value of the second operation characteristic in response to a user selection of the selected value of the second operation characteristic; and
display, on said display device (132), a second representation of a difference between the first operation characteristic of a second plot of the plurality of graphical plots and the reference graphical plot at the first selected value of the second operation characteristic in response to a user selection of the second plot.

11. A method for use in monitoring operation of a system asset (102) comprising a device or a machine, said method comprising:
displaying, on a display device (132), a first plot of a first operation characteristic of the system asset (102) as a function of a second operation characteristic in response to a user selection to display the first plot;
displaying, on the display device (132), a reference graphical plot of the first operation characteristic of the system asset (102) as a function of the second operation characteristic overlying the first plot of the plurality of graphical plots, wherein the reference graphical plot is based on expected or predicted performance of the system asset (102) based on a manufacturer's specifications for the particular system asset (102);
maintaining the display of the reference graphical plot on the display device (132) when the user selects a second plot of the plurality of graphical plots, the reference graphical plot displayed overlying the second plot;
receiving a selection of one or more points on the selected measurement plot about which the user desires detailed information; and
displaying a representation of the difference between the first operation characteristic and the reference graphical plot at the selected value of the second operation characteristic.

12. A method in accordance with Claim 11, further comprising:
generating, based on measurement data concerning the system asset (102), a plurality of graphical plots, each of the plurality of graphical plots corresponding to a different period of time, the plurality of graphical plots including the first plot; and
generating, based on stored reference data, the reference graphical plot.

13. A method in accordance with Claim 12, further comprising:
displaying, on the display device (132), a plurality of additional plots from the plurality of graphical plots in response to the selection of the first plot by the user, the first plot corresponding to a first time period and the additional plots corresponding to two or more additional time periods.

14. A method in accordance with Claim 13, further comprising:
moving the display of the reference graphical plot on the display device (132) to overly the second plot when the user selects the second plot.

15. A method in accordance with Claim 13 or claim 14, further comprising:
moving the second plot to underlie the reference graphical plot on the display device (132) when the user selects the second plot.

## Patentansprüche

1. Vorrichtung (108) zur Verwendung bei der Überwachung des Betriebs einer Systemanlage (102), umfassend eine Vorrichtung oder eine Maschine, wobei die Vorrichtung (108) umfasst:
eine Anzeigevorrichtung (132); und
einen Prozessor (124), der mit der Anzeigevorrichtung (132) gekoppelt ist, wobei der Prozessor konfiguriert ist, um:
auf der Anzeigevorrichtung (132) eine erste Darstellung einer Vielzahl von grafischen Darstellungen von einer ersten Betriebscharakteristik der Systemanlage (102) in Abhängigkeit von einer zweiten Betriebscharakteristik in Reaktion auf eine Benutzerauswahl zum Anzeigen der ersten Darstellung der Vielzahl von grafischen Darstellungen anzuzeigen;
auf der Anzeigevorrichtung (132) eine grafische Referenzdarstellung der ersten Betriebscharakteristik der Systemanlage (102) in Abhängigkeit von der zweiten Betriebscharakteristik anzuzeigen, die über der ersten Darstellung der Vielzahl von grafischen Darstellungen liegt, wobei die grafische Referenzdarstellung auf der erwarteten oder vorhergesagten Leistung der Systemanlage (102) basierend auf den Spezifikationen eines Herstellers für die jeweilige Systemanlage (102) basiert; und
die Anzeige der grafischen Referenzdarstellung auf der Anzeigevorrichtung aufrechtzuerhalten, wenn der Benutzer eine zweite Darstellung der Vielzahl von grafischen Darstellungen auswählt, wobei die angezeigte grafische Referenzdarstellung über der zweiten Darstellung liegt;
eine Auswahl von einem oder mehreren Punkten auf der ausgewählten Messdarstellung, über die der Benutzer detaillierte Informationen wünscht, zu empfangen; und
eine Angabe der Differenz zwischen der ersten Betriebscharakteristik und der grafischen Referenzdarstellung bei dem ausgewählten Wert der zweiten Betriebscharakteristik anzuzeigen.

2. Vorrichtung nach Anspruch 1, ferner umfassend eine Speichervorrichtung (126), die konfiguriert ist, um Referenzdaten für eine Systemanlage (102) und Messdaten, die der Systemanlage zugeordnet sind, zu speichern, wobei der Prozessor (124) ferner konfiguriert ist, um:
basierend auf den Messdaten, die die Systemanlage betreffen, die Vielzahl von grafischen Darstellungen zu erzeugen, wobei jede der Vielzahl von grafischen Darstellungen einer anderen Zeitperiode entspricht; und
basierend auf den gespeicherten Referenzdaten die grafische Referenzdarstellung zu erzeugen.

3. Vorrichtung nach Anspruch 2, wobei der Prozessor (124) konfiguriert ist, um auf der Anzeigevorrichtung (132) die zweite Darstellung mit der ersten grafischen Darstellung als Reaktion auf die Auswahl der ersten Darstellung durch den Benutzer anzuzeigen, wobei die erste Darstellung einer ersten Zeitperiode entspricht und die zweite Darstellung einer zweiten Zeitperiode entspricht.

4. Vorrichtung nach Anspruch 3, wobei die zweite Zeitperiode relativ zu der ersten Zeitperiode eine nächste Zeitperiode ist, für die eine grafische Darstellung in der Vielzahl von grafischen Darstellungen verfügbar ist.

5. Vorrichtung nach einem der vorstehenden Ansprüche, wobei der Prozessor (124) konfiguriert ist, um auf der Anzeigevorrichtung (132) eine Vielzahl von zusätzlichen Darstellungen, die von dem Prozessor aus der Vielzahl von grafischen Darstellungen ausgewählt werden, als Reaktion auf die Auswahl der ersten Darstellung durch den Benutzer auszuwählen und anzuzeigen, wobei die erste Darstellung einer ersten Zeitperiode entspricht und die zusätzlichen Darstellungen zwei oder mehr zusätzlichen Zeitperioden entsprechen.

6. Vorrichtung nach Anspruch 5, wobei die Vielzahl von zusätzlichen Darstellungen die zweite Darstellung einschließt.

7. Vorrichtung nach Anspruch 6, wobei der Prozessor (124) konfiguriert ist, um die Anzeige der grafischen Referenzdarstellung auf der Anzeigevorrichtung (132) so zu bewegen, dass sie über der zweiten Darstellung liegt, wenn der Benutzer die zweite Darstellung auswählt.

8. Vorrichtung nach Anspruch 6 oder Anspruch 7, wobei der Prozessor (124) konfiguriert ist, um die Anzeige der zweiten Darstellung zu bewegen, sodass sie auf der Anzeigevorrichtung (132) unter der grafischen Referenzdarstellung liegt, wenn der Benutzer die zweite Darstellung auswählt.

9. Vorrichtung nach einem der vorstehenden Ansprüche, wobei der Prozessor (124) konfiguriert ist, um in einer Speichervorrichtung einen ausgewählten Messdatenwert als den Referenzdatenwert für die Systemanlage als Reaktion auf eine Benutzerauswahl zum Speichern des ausgewählten Messdatenwerts als Referenzdatenwert für die Systemanlage zu speichern.

10. Vorrichtung nach einem der vorstehenden Ansprüche, wobei der Prozessor konfiguriert ist, um:
auf der Anzeigevorrichtung (132) eine erste Angabe einer Differenz zwischen der ersten Betriebscharakteristik der ersten Darstellung und der grafischen Referenzdarstellung an einem ersten ausgewählten Wert der zweiten Betriebscharakteristik als Reaktion auf eine Benutzerauswahl des ausgewählten Wertes der zweiten Betriebscharakteristik anzuzeigen; und
auf der Anzeigevorrichtung (132) eine zweite Angabe einer Differenz zwischen der ersten Betriebscharakteristik einer zweiten Darstellung der Vielzahl von grafischen Darstellungen und der grafischen Referenzdarstellung an dem ersten ausgewählten Wert der zweiten Betriebscharakteristik als Reaktion auf eine Benutzerauswahl der zweiten Darstellung anzuzeigen.

11. Verfahren zur Verwendung bei der Überwachung des Betriebs einer Systemanlage (102), umfassend eine Vorrichtung oder eine Maschine, wobei das Verfahren umfasst:
Anzeigen, auf einer Anzeigevorrichtung (132), einer ersten Darstellung einer ersten Betriebscharakteristik der Systemanlage (102) in Abhängigkeit von einer zweiten Betriebscharakteristik als Reaktion auf eine Benutzerauswahl zum Anzeigen der ersten Darstellung;
Anzeigen, auf der Anzeigevorrichtung (132), einer grafischen Referenzdarstellung der ersten Betriebscharakteristik der Systemanlage (102) in Abhängigkeit von der zweiten Betriebscharakteristik, die über der ersten Darstellung der Vielzahl von grafischen Darstellungen liegt, wobei die grafische Referenzdarstellung auf der erwarteten oder vorhergesagten Leistung der Systemanlage (102) basierend auf den Spezifikationen eines Herstellers für die jeweilige Systemanlage (102) basiert;
Aufrechterhalten der Anzeige der grafischen Referenzdarstellung auf der Anzeigevorrichtung (132), wenn der Benutzer eine zweite Darstellung der Vielzahl von grafischen Darstellungen auswählt, wobei die angezeigte grafische Referenzdarstellung über der zweiten Darstellung liegt;
Empfangen einer Auswahl von einem oder mehreren Punkten auf der ausgewählten Messdarstellung, über die der Benutzer detaillierte Informationen wünscht; und
Anzeigen einer Angabe der Differenz zwischen der ersten Betriebscharakteristik und der grafischen Referenzdarstellung bei dem ausgewählten Wert der zweiten Betriebscharakteristik.

12. Verfahren nach Anspruch 11, ferner umfassend:
Erzeugen, basierend auf Messdaten, die die Systemanlage (102) betreffen, einer Vielzahl von grafischen Darstellungen, wobei jede der Vielzahl von grafischen Darstellungen einer anderen Zeitperiode entspricht, wobei die Vielzahl von grafischen Darstellungen die erste Darstellung einschließt; und
Erzeugen, basierend auf gespeicherten Referenzdaten, der grafischen Referenzdarstellung.

13. Verfahren nach Anspruch 12, ferner umfassend:
Anzeigen, auf der Anzeigevorrichtung (132), einer Vielzahl von zusätzlichen Darstellungen aus der Vielzahl von grafischen Darstellungen als Reaktion auf die Auswahl der ersten Darstellung durch den Benutzer, wobei die erste Darstellung einer ersten Zeitperiode entspricht und die zusätzlichen Darstellungen zwei oder mehr zusätzlichen Zeitperioden entsprechen.

14. Verfahren nach Anspruch 13, ferner umfassend:
Bewegen der Anzeige der grafischen Referenzdarstellung auf der Anzeigevorrichtung (132), sodass sie über der zweiten Darstellung liegt, wenn der Benutzer die zweite Darstellung auswählt.

15. Verfahren nach Anspruch 13 oder Anspruch 14, ferner umfassend:
Bewegen der zweiten Darstellung, sodass sie auf der Anzeigevorrichtung (132) unter der grafischen Referenzdarstellung liegt, wenn der Benutzer die zweite Darstellung auswählt.

## Revendications

1. Dispositif (108) pour une utilisation dans une opération de surveillance d'une ressource système (102) comprenant un dispositif ou une machine, ledit dispositif (108) comprenant :
un dispositif d'affichage (132) ; et
un processeur (124) couplé audit dispositif d'affichage (132), ledit processeur configuré pour :
afficher, sur ledit dispositif d'affichage (132), un premier tracé d'une pluralité de tracés graphiques d'une première caractéristique de fonctionnement de la ressource système (102) en fonction d'une deuxième caractéristique de fonctionnement en réponse à une sélection par l'utilisateur pour afficher le premier tracé de la pluralité de tracés graphiques ;
afficher, sur ledit dispositif d'affichage (132), un tracé graphique de référence de la première caractéristique de fonctionnement de la ressource système (102) en fonction de la deuxième caractéristique de fonctionnement se trouvant au-dessus du premier tracé de la pluralité de tracés graphiques, dans lequel le tracé graphique de référence est basé sur une performance attendue ou prévue de la ressource système (102) sur la base de spécifications d'un fabricant pour la ressource système particulière (102) ; et
maintenir l'affichage du tracé graphique de référence sur ledit dispositif d'affichage lorsque l'utilisateur sélectionne un deuxième tracé de la pluralité de tracés graphiques, le tracé graphique de référence affiché se trouvant au-dessus du deuxième tracé ;
recevoir une sélection d'un ou plusieurs points sur le tracé de mesure sélectionné à propos desquels l'utilisateur souhaite des informations détaillées ; et
afficher une représentation de la différence entre la première caractéristique de fonctionnement et le tracé graphique de référence au niveau de la valeur sélectionnée de la deuxième caractéristique de fonctionnement.

2. Dispositif selon la revendication 1, comprenant en outre un dispositif de mémoire (126) configuré pour stocker des données de référence pour une ressource système (102), et des données de mesure associées à la ressource système, dans lequel ledit processeur (124) est en outre configuré pour :
générer, sur la base des données de mesure concernant la ressource système, la pluralité de tracés graphiques, chacun parmi la pluralité de tracés graphiques correspondant à une période de temps différente ; et
générer, sur la base des données de référence stockées, le tracé graphique de référence.

3. Dispositif selon la revendication 2, dans lequel ledit processeur (124) est configuré pour afficher, sur ledit dispositif d'affichage (132), le deuxième tracé avec le premier tracé graphique en réponse à la sélection du premier tracé par l'utilisateur, le premier tracé correspondant à une première période de temps et le deuxième tracé correspondant à une deuxième période de temps.

4. Dispositif selon la revendication 3, dans lequel la deuxième période de temps est une période de temps suivante, par rapport à la première période de temps, pour laquelle un tracé graphique est disponible dans la pluralité de tracés graphiques.

5. Dispositif selon l'une quelconque revendication précédente, dans lequel ledit processeur (124) est configuré pour sélectionner et afficher, sur ledit dispositif d'affichage (132), une pluralité de tracés supplémentaires sélectionnés par le processeur parmi la pluralité de tracés graphiques en réponse à la sélection du premier tracé par l'utilisateur, le premier tracé correspondant à une première période de temps et les tracés supplémentaires correspondant à deux périodes de temps supplémentaires ou plus.

6. Dispositif selon la revendication 5, dans lequel la pluralité de tracés supplémentaires inclut le deuxième tracé.

7. Dispositif selon la revendication 6, dans lequel ledit processeur (124) est configuré pour déplacer l'affichage du tracé graphique de référence sur le dispositif d'affichage (132) pour se trouver au-dessus du deuxième tracé lorsque l'utilisateur sélectionne le deuxième tracé.

8. Dispositif selon la revendication 6 ou la revendication 7, dans lequel ledit processeur (124) est configuré pour déplacer le deuxième tracé pour se trouver en dessous du tracé graphique de référence sur le dispositif d'affichage (132) lorsque l'utilisateur sélectionne le deuxième tracé.

9. Dispositif selon l'une quelconque revendication précédente, dans lequel ledit processeur (124) est configuré pour stocker, vers un dispositif de mémoire, des données de mesure sélectionnées en guise de données de référence pour la ressource système en réponse à une sélection par l'utilisateur pour stocker les données de mesure sélectionnées en guise de données de référence pour la ressource système.

10. Dispositif selon l'une quelconque revendication précédente, dans lequel ledit processeur est configuré pour :
afficher, sur ledit dispositif d'affichage (132), une première représentation d'une différence entre la première caractéristique de fonctionnement du premier tracé et du tracé graphique de référence à une première valeur sélectionnée de la deuxième caractéristique de fonctionnement en réponse à une sélection par l'utilisateur de la valeur sélectionnée de la deuxième caractéristique de fonctionnement ; et
afficher, sur ledit dispositif d'affichage (132), une deuxième représentation d'une différence entre la première caractéristique de fonctionnement d'un deuxième tracé de la pluralité de tracés graphiques et du tracé graphique de référence à la première valeur sélectionnée de la deuxième caractéristique de fonctionnement en réponse à une sélection par l'utilisateur du deuxième tracé.

11. Procédé pour utilisation dans une opération de surveillance d'une ressource système (102) comprenant un dispositif ou une machine, ledit procédé comprenant :
l'affichage, sur un dispositif d'affichage (132), d'un premier tracé d'une première caractéristique de fonctionnement de la ressource système (102) en fonction d'une deuxième caractéristique de fonctionnement en réponse à une sélection par l'utilisateur pour afficher le premier tracé ;
l'affichage, sur le dispositif d'affichage (132), d'un tracé graphique de référence de la première caractéristique de fonctionnement de la ressource système (102) en fonction de la deuxième caractéristique de fonctionnement se trouvant au-dessus du premier tracé de la pluralité de tracés graphiques, dans lequel le tracé graphique de référence est basé sur une performance attendue ou prévue de la ressource système (102) sur la base de spécifications d'un fabricant pour la ressource système particulière (102) ;
la maintien de l'affichage du tracé graphique de référence sur le dispositif d'affichage (132) lorsque l'utilisateur sélectionne un deuxième tracé de la pluralité de tracés graphiques, le tracé graphique de référence affiché se trouvant au-dessus du deuxième tracé ;
la réception d'une sélection d'un ou plusieurs points sur le tracé de mesure sélectionné à propos desquels l'utilisateur souhaite des informations détaillées ; et
l'affichage d'une représentation de la différence entre la première caractéristique de fonctionnement et le tracé graphique de référence au niveau de la valeur sélectionnée de la deuxième caractéristique de fonctionnement.

12. Procédé selon la revendication 11, comprenant en outre :
la génération, sur la base de données de mesure concernant la ressource système (102), d'une pluralité de tracés graphiques, chacun parmi la pluralité de tracés graphiques correspondant à une période de temps différente, la pluralité de tracés graphiques incluant le premier tracé ; et
la génération, sur la base des données de référence stockées, du tracé graphique de référence.

13. Procédé selon la revendication 12, comprenant en outre :
l'affichage, sur le dispositif d'affichage (132), d'une pluralité de tracés supplémentaires parmi la pluralité de tracés graphiques en réponse à la sélection du premier tracé par l'utilisateur, le premier tracé correspondant à une première période de temps et les tracés supplémentaires correspondant à deux périodes de temps supplémentaires ou plus.

14. Procédé selon la revendication 13, comprenant en outre :
le déplacement de l'affichage du tracé graphique de référence sur le dispositif d'affichage (132) pour se trouver au-dessus du deuxième tracé lorsque l'utilisateur sélectionne le deuxième tracé.

15. Procédé selon la revendication 13 ou la revendication 14, comprenant en outre :
le déplacement du deuxième tracé pour se trouver en dessous du tracé graphique de référence sur le dispositif d'affichage (132) lorsque l'utilisateur sélectionne le deuxième tracé.
